# EUROPÄISCHE PATENTSCHRIFT

(11) **EP 3 753 385 B1**
(45) Veröffentlichungstag und Bekanntmachung des Hinweises auf die Patenterteilung: **07.06.2023**
(21) Anmeldenummer: 20180481.2
(22) Anmeldetag: 17.06.2020
(51) Int. Cl.: A01B 59/043, A01B 59/048, A01B 49/02

(54) **TRAGWERK FÜR DIE VERBINDUNG ZWEIER LANDWIRTSCHAFTLICHER ANBAUGERÄTE MIT EINEM SCHLEPPER SOWIE LANDWIRTSCHAFTLICHES ANBAUGERÄT**
SUPPORTING STRUCTURE FOR CONNECTING TWO AGRICULTURAL IMPLEMENTS TO A TRACTOR AND AGRICULTURAL IMPLEMENT
STRUCTURE PORTEUSE POUR LE RACCORDEMENT DE DEUX ACCESSOIRES AGRICOLES À UN TRACTEUR AINSI QU'ACCESSOIRE AGRICOLE

(30) Priorität: 17.06.2019 DE 102019116389
(43) Veröffentlichungstag der Anmeldung: 23.12.2020
(73) Patentinhaber: Grimme Landmaschinenfabrik GmbH & Co. KG, 49401 Damme (DE)
(72) Erfinder: Gottkehaskamp, Frank, 49439 Steinfeld (DE); Lange gen. Detert, Ansgar, 49324 Melle (DE)
(74) Vertreter: Wischmeyer, André

(56) Entgegenhaltungen:
- EP-A1- 1 360 886
- WO-A1-2017/149379
- DE-A1- 3 421 178
- DE-U1- 9 407 799
- GB-A- 2 155 745
- US-A1- 2008 142 231

## Beschreibung

Die vorliegende Erfindung betrifft ein Tragwerk für die Verbindung zweier landwirtschaftlicher Anbaugeräte mit einem Schlepper-Dreipunkt-Kraftheber sowie ein landwirtschaftliches Anbaugerät.

Um möglichst zeitsparend landwirtschaftliche Flächen zu bewirtschaften, gibt es eine Reihe von konstruktiven Lösungen, Bodenbearbeitungsgeräte dergestalt zu kombinieren, dass diese gemeinsam an einem Schlepper, insbesondere dessen Schlepper-Dreipunkt-Kraftheber angeordnet werden. Hierdurch werden zwei ansonsten separat durchführbare Arbeitsgänge, zwischen denen das Anbaugerät gewechselt werden muss, während einer einzigen Schlepperfahrt durchgeführt.

Beispielhaft ist in der EP 0172358 B1 ein Tragwerk offenbart, welches ein Flügel- oder Blattschare aufweisendes erstes Bearbeitungsgerät mit einem weiteren Anbaugerät zur Krümelung der obersten Bodenschichten durch rotierende Werkzeuge kombiniert. Ebenfalls ist aus der DE 3636015 A1 eine Gerätekombination bekannt, bei der ein Tragwerk der Verbindung eines Düngerstreuers und einer Sämaschine dient.

Die DE 34 21 178 A1 offenbart eine Vorrichtung zur Gerätekombination zur Bodenbearbeitung. Ein Dreipunkt-Anhängeorgan der Vorrichtung ist mit einer Dreipunkthydraulik eines Schleppers zu verbinden und nimmt ein erstes Bodenbearbeitungsgerät ortsfest auf. An dem Dreipunkt-Anhängeorgan ist ein Zugarm lösbar angehängt, der das erste Bodenbearbeitungsgerät übergreift und ein zweites Bodenbearbeitungsgerät aufnimmt, das auf dem Boden abrollt.

Die DE 94 07 799 U1 offenbart einen landwirtschaftlichen Geräteverbund zur Ankopplung an einen Schlepper. Die GB 2 155 745 A offenbart ein landwirtschaftliches Anbaugerät zur Bodenkultivierung. Die EP 1 360 886 A1, die WO 2017 / 149 379 A1 und die US 2008 / 0 142 231 A1 offenbaren starre Rahmen zur Herstellung einer Verbindung zwischen einem Schlepper und einer Arbeitsmaschine.

Die im Stand der Technik bekannten Vorrichtungen besitzen den Nachteil, dass sie komplex aufbauen, jeweils Sonderlösungen für einzelne Anbaugeräte und damit nicht ausreichend universell einsetzbar sind.

Es ist Aufgabe der vorliegenden Erfindung, ein Tragwerk zu schaffen, welches für eine Vielzahl unterschiedlicher Anbaugeräte einsetzbar ist.

Die Aufgabe wird gelöst durch einen Gegenstand gemäß Anspruch 1 sowie durch einen Gegenstand nach Anspruch 16. Vorteilhafte Ausgestaltungen der Erfindung sind den Unteransprüchen sowie der nachfolgenden Beschreibung zu entnehmen.

Ein erfindungsgemäßes Tragwerk für die Verbindung zweier landwirtschaftlicher Anbaugeräte mit einem Schlepper-Dreipunkt-Kraftheber umfasst einen Rahmen mit zumindest einem unteren, vorzugsweise mit zumindest einem oberen Querträger, sowie mit zumindest einem, vorzugsweise zwei Seitenträgern, wobei das Tragwerk zumindest zwei, bevorzugt insgesamt drei und zwar besonders bevorzugt eine obere und zwei untere Kopplungseinheiten für eine Dreipunktverbindung mit einem ersten Anbaugerät aufweist, das Tragwerk weiter im Betrieb zum Schlepper hin gerichtet mindestens ein, vorzugsweise zwei Unterlenkerkopplungsmittel und vorzugsweise mindestens ein und insbesondere genau ein Oberlenkerkopplungsmittel zur Verbindung mit dem Schlepper-Dreipunkt-Kraftheber umfasst und eine oben am Rahmen, insbesondere am oberen Querträger angeordnete Koppelvorrichtung zur Befestigung des mindestens einen weiteren Anbaugerätes aufweist. Insbesondere dient die oben am Rahmen angeordnete Koppelvorrichtung zur Befestigung einer Deichsel, beispielsweise eines als Schwanenhals ausgebildeten Deichsel des weiteren Anbaugerätes. Das auch als Zwischenrahmen zu bezeichnende Tragwerk ist somit einerseits in der Dreipunktaufnahme des Schleppers festlegbar und bildet andererseits ebenfalls eine Dreipunktaufnahme zur standardgemäßen Anbindung unterschiedlicher, erster Anbaugeräte aus, während oben am Rahmen, insbesondere am oberen Querträger eine dann über das in Fahrtrichtung betrachtet erste Anbaugerät hinüberreichende Deichsel oder dergleichen Anbindung das wenigstens eine weitere, zweite Anbaugerät befestigbar ist. Insofern kann die Deichsel, die im Betrieb fest an dem zweiten Anbaugerät positioniert ist, ebenfalls Teil der erfindungsgemäßen Vorrichtung sein.

Das in Fahrtrichtung zweite Anbaugerät ist hierfür mit einem eigenen Fahrwerk zu versehen. Durch die Befestigung des zweiten Anbaugeräts an der Koppelvorrichtung wird dieses dergestalt fest mit dem Tragwerk verbunden, dass das Tragwerk gemäß der Straßenverkehrszulassungsordnung Teil des zweiten Anbaugeräts, beispielsweise einer Kartoffel-Legemaschine ist, welches dann als Trägerfahrzeug für das erste Bodenbearbeitungsgerät dient. Die Koppenvorrichtung weist Mittel zur Befestigung vorzugsweise genau eines Anbaugeräts auf, sie kann jedoch in einer weiteren erfindungsgemäßen Weiterbildung Mittel zur Befestigung zweier oder mehr weiterer Anbaugeräte aufweisen. Insbesondere weist die Koppelvorrichtung bei einem weiteren Anbaugerät mindestens eine Gelenkverbindung auf, durch die das weitere Anbaugerät, insbesondere dessen Deichsel beispielsweise in Form eines Schwanenhalses relativ zum Rahmen beweglich ist. Bei zwei weiteren Anbaugeräten kann beispielsweise eines über eine Gelenkverbindung und ein weiteres über eine starre Verbindung oder ebenfalls über eine weitere Gelenkverbindung verbunden werden. Als Schwanenhalts wird eine über ein in Fahrtrichtung erstes Anbaugerät hinüberragende insbesondere bogen- oder S-förmig ausgebildete Deichsel oder dergleichen Anbindung eines weiteren Anbaugeräts verstanden.

Die Koppelvorrichtung ist vorzugsweise dergestalt demontagesicher und insbesondere technisch gefügt mit dem weiteren Anbaugerät verbindbar und festlegbar ausgebildet, dass es zum Lösen des weiteren Anbaugeräts von der Koppelvorrichtung und mithin von dem eigentlichen Tragwerk eines Werkzeugs bedarf. Insbesondere weist die Koppelvorrichtung eine ungenormte, maschinenbauliche Kupplung, beispielsweise in Form einer Gelenkverbindung, auf, durch die das weitere Anbaugerät im Sinne der Straßenverkehrszulassung Teil des Tragwerks wird, so dass eine Kombination aus Schlepper, Tragwerk, erstem und zweitem Anbaugerät für den Straßenverkehr zugelassen ist. Die Verwendung einer ungenormten, maschinenbaulichen Kupplung bewirkt die demontagesichere Ausbildung, wobei "ungenormt" mit "nicht für den Straßenverkehr genormt" gleichzusetzen ist.

Insbesondere ist zur Verbindung des weiteren Anbaugeräts mit der Koppelvorrichtung eine vorzugsweise mit Ausnehmungen für Schraubmittel versehene Adaptervorrichtung, insbesondere in Form einer Adapterplatte, vorgesehen. Über diese ist eine form- und/oder kraftschlüssige Verbindung beispielsweise mit der Deichsel oder dem Schwanenhals eines weiteren Anbaugeräts möglich, wobei für jeweilige Schraubmittel ein Drehmoment von vorzugsweise mindestens 25 Nm vorgesehen ist. Das hierfür notwendige Werkzeug ist insbesondere ein manuell zum Lösen der Verbindung von einer Person zu betätigendes Werkzeug, d.h. kein Schalter oder dgl., mit dem die Befestigung des zweiten Anbaugeräts von dem Tragwerk automatisiert gelöst werden kann.

Vorzugsweise umfasst die Koppelvorrichtung eine Gelenkverbindung, durch dass das weitere, zweite Anbaugerät, insbesondere dessen Deichsel, relativ zum Rahmen beweglich ist. Der eine Teil der Koppelvorrichtung ist somit fest am Rahmen, vorzugsweise am oberen Querträger angeordnet, während der hierzu relativ bewegliche weitere Teil der Gelenkverbindung fest mit der Deichsel oder dgl. Verbindungsmittel des weiteren Anbaugeräts und somit relativbeweglich zu diesem verbunden ist.

Das an dem Schlepper-Dreipunkt-Kraftheber festlegbare Tragwerk bildet erfindungsgemäß selbst einen Dreipunkt-Kraftheber aus, dessen untere Kopplungseinheiten insbesondere mit Fanghaken versehen oder durch diese ausgebildet sind. Diese können darüber hinaus in bekannter Weise Reduzierkugeln aufweisen.

Vorzugsweise sind die unteren Kopplungseinheiten mittels wenigstens einer Stellvorrichtung des Tragwerks relativ zu der oberen Kopplungseinheit höhenverstellbar. Hierdurch wird die Aufnahme des Anbaugeräts analog zu den Schlepper-Dreipunkt-Krafthebern ermöglicht. Gleichzeitig ergeben sich für das erste Anbaugerät ähnliche Möglichkeiten in der Höhenverstellung.

Die unteren Fanghaken, die beispielsweise die unteren Kopplungseinheiten ausbilden oder Teil desselben sind, sind hierfür vorzugsweise jeweils an einem Unterlenker angeordnet. Diese Unterlenker sind insbesondere gelenkig entweder an dem unteren Querträger oder jeweils an einem linken und/oder rechten Seitenträger gelenkig angeordnet.

Insbesondere sind die beiden unteren Kopplungseinheiten jeweils an Unterlenkern angeordnet, die jeweils an einem Seitenträger gelenkig angeordnet sind, wodurch durch Anordnung eines Anbaugeräts entstehende Lastmomente direkt in die Seitenträger eingeleitet werden. Dies ist insbesondere dann von Vorteil, wenn die Seitenträger über Unterlenkerkopplungsmittel ihrerseits wiederum in den Aufnahmepunkten der Schlepper-Dreipunkt-Kraftheber anzuordnen sind.

Sowohl die unteren und oberen Querträger als auch die Seitenträger sind vorzugsweise durchgehend und ohne Gelenkstellen ausgebildet. Sie können jedoch jeweils auch mehrteilig über mehrere im Wesentlichen parallel verlaufende Tragteile, beispielsweise in Form von Stahlblechen ähnlich einem T- oder U-Träger ausgebildet werden.

Ebenfalls ist eine Anordnung von Vorteil, bei der die Stellvorrichtung einen zwischen einerseits der unteren Kopplungseinheit oder dem Unterlenker und andererseits einem der Seitenträger angeordneten Zylinder umfasst. Die vom Zylinder ausgeübten bzw. von diesem aufzufangenden Kräfte lassen sich somit einfach abfangen. Dies gilt insbesondere für zumindest in etwa senkrecht verlaufende Seitenteile. Aufgrund der Stellvorrichtung sind die unteren Kopplungseinheiten mittels vorzugsweise an beiden Seitenträger angelenkten Zylindern relativ zu der oberen Kopplungseinheit höhenverstellbar, was im Betrieb eine gleichmäßige Höhenverstellung ermöglicht.

Mittels der Stellvorrichtung kann eine Höhenverstellung eines Anbaugeräts unabhängig von der Höhe des Schlepper-Dreipunkt-Krafthebers erfolgen. Zusätzlich kann über eine entsprechende Ausbildung, bei der die Stellvorrichtung des Tragwerks mit der Stellvorrichtung des Schlepper-Dreipunkt-Krafthebers gekoppelt ist, ein Anheben der Deichsel des zweiten Anbaugeräts, welche ansonsten zu einem Anheben des ersten Anbaugeräts durch die Stellvorrichtung des Tragwerks führt, kompensiert werden. Umgekehrt kann durch ein kombiniertes Anheben des ersten Anbaugeräts und des Schlepper-Dreipunkt-Krafthebers das Anbaugerät insgesamt einen höheren Hub erfahren.

Durch die Kopplungseinheiten des Tragwerks und etwaig zugehörigen Lenkern wird von der Seite betrachtet eine Parallelogrammführung des Anbaugeräts realisiert. Bei einer Schwimmstellung des oder der Zylinder der Stellvorrichtung des Tragwerks kann das erste Anbaugerät dann unabhängig von einer Vertikalbewegung des Schlepper-Dreipunkt-Krafthebers gezogen werden.

Die für die Stellvorrichtung notwendige Ansteuerung kann über eine Schlepperhydraulik erfolgen. Die Ansteuerung ist vorzugsweise in die Steuerung des Schleppers oder eines Anbaugeräts integriert, so dass die insbesondere hydraulische Stellvorrichtung des Tragwerks von dem Fahrerplatz oder einem alternativen Bedienplatz aus bedienbar ist. Entsprechend kann das Tragwerk eigene Teile der Stellvorrichtung, insbesondere Hydraulikschläuche, aufweisen sowie alternativ durch vom Schlepper her stammende Hydraulikschläuche versorgt werden. Alternativ oder ergänzend kann das Tragwerk eine eigene oder eine in den Schlepper zu integrierende Steuereinheit aufweisen, die über eigene Steuermittel eine Ansteuerung oder automatische Steuerung der Tragwerkshydraulik und die angeschlossener Anbaugeräte ermöglicht.

Die Verteilung der Lasten im Tragwerk ist insbesondere dann verbessert, wenn die unteren Kopplungseinheiten und/oder die Unterlenker und/oder die unteren Enden der Seitenträger über den unteren Querträger miteinander verbunden sind. Die Seitenträger und der untere Querträger bilden dann mit oder ohne die Unterlenker in der Rückansicht ein Dreieck oder zumindest ein "U" aus, so dass eine von der Schlepper-Dreipunkt-Hydraulik zu übertragende Verschwenkung beispielsweise aufgrund von Richtungsänderungen des Schleppers möglichst gut auf das Anbaugerät übertragen wird.

Gemäß einem einfachen Ausführungsbeispiel der Erfindung bilden ein Seitenträger und ein unterer Querträger von vorne oder hinten betrachtet ein auf dem Kopf stehendes "T" aus. Gemäß einem weiteren Ausführungsbeispiel bilden die Seitenträger mit dem unteren Querträger von vorne oder hinten betrachtet zumindest im Wesentlichen ein vorzugsweise gleichschenkliges Dreieck aus, an dessen oberer Spitze die obere Koppelvorrichtung angeordnet ist. Diese Form des Tragwerks, bei dem etwaig vorhandene Zylinder einer Stellvorrichtung insbesondere entlang der Seitenträger verlaufen, baut besonders kompakt. Etwaig auftretende Kräfte werden direkt zwischen den Lagerpunkten vermittelt.

In einem Ausführungsbeispiel mit einem oberen Querträger bilden betrachtet in einer im Betrieb vorhandenen Fahrtrichtung der untere Querträger, der obere Querträger sowie die Seitenträger zumindest im Wesentlichen ein Rechteck aus, dessen Fläche zumindest im Wesentlichen senkrecht auf dem Boden steht. Alternativ kann bei nach oben zueinander hin geneigten Seitenträgern eine im Wesentlichen trapezförmige Anordnung ausgebildet werden, dessen Fläche ebenfalls im Wesentlichen senkrecht zum Boden steht. Durch diese rechteckige oder trapezförmige Anordnung können die von der Stellvorrichtung ausgeübten Kräfte senkrecht(er) zum Untergrund und damit besser zu den Last tragenden Teilen des Tragwerks, welche wiederum die Last auf die Schlepper-Unterlenker übertragen, abgeleitet werden.

Für den Fall, dass ein Unterlenker und/oder die unteren Enden der Seitenträger und/oder die unteren Kopplungseinheiten über den unteren Querträger miteinander verbunden sind, kann ergänzend ein weiterer Querträger den Rahmen des Tragwerks zusätzlich aussteifen und zwischen dem linken und dem rechten Seitenträger diese verbindend angeordnet sein.

Vorzugsweise umfasst die obere Kopplungseinheit mindestens und insbesondere einen an der oberen Querstrebe gelenkig oder für einfachere Ausführungsbeispiele auch starr festgelegten Oberlenker. Die Festlegung an dem Querträger kann direkt oder über eine zusätzliche Aufnahme in Form eines Flansches oder zumindest eines anderen Verbindungselements, welches von dem eigentlichen Querträger ausgeht und beispielsweise an diesen angeschweißt ist, erfolgen. Insbesondere ist der Oberlenker zwischen zwei Verbindungselementen in Form von sich senkrecht zum oberen Querträger erstreckenden Blechen gelenkig über einen Bolzen festgelegt. Diese Verbindungselemente können so groß dimensioniert sein, dass sie zusätzlich als Oberlenkerverbindungsmittel eine Verbindung für einen Schlepper-Oberlenker des Schlepper-Dreipunkt-Krafthebers (mit) ausbilden, so dass ein direkter Kraftfluss vom Schlepper-Oberlenker zum Oberlenker des Tragwerks über die Verbindungselemente ermöglicht wird.

Insbesondere ist die Koppelvorrichtung mittig an dem oberen Querträger angeordnet, so dass eine insbesondere direkte Verbindung zum zweiten Anbaugerät mittig erfolgt und entsprechende Gewichtsmomente gleichmäßig verteilt werden.

Die Koppelvorrichtung umfasst vorzugsweise eine Bolzen-, Maul-, Sattel-, Haken-, oder Kugelkopfkupplung, deren jeweilige die Freiheitsgrade realisierenden Gelenkteile ebenfalls werkzeuglos unlösbar miteinander verbunden sind. So kann beispielsweise eine vorzugsweise verwendete Kugelkopfkupplung eine über Schraubverbindungen mit entsprechend hohen Anzugsmomenten gegen Lösen vom Kugelkopf festgelegte, gesicherte, den Kugelkopf umgreifende Kugelschale aufweisen.

Die Unterlenkerkopplungsmittel sind vorzugsweise in die Seitenträger integriert oder an diesen festgelegt, was die Stabilität der Vorrichtung erhöht. Beispielsweise kann ein jeweiliger Seitenträger durch zwei ausreichend starke im Wesentlichen parallel verlaufende Metallbleche ausgebildet werden, zwischen denen ein Bolzen als Unterlenkerkopplungsmittel zur Integration in den Fanghaken eines Schlepper-Unterlenkers angeordnet ist.

Entsprechend umfasst das Oberlenker-Kopplungsmittel vorteilhafterweise wie vorbeschrieben ebenfalls vorzugsweise einen Bolzen zwischen zwei am oberen Querträger angeordneten Verbindungselementen in Form von Blechen.

Die eingangs gestellte Aufgabe wird ebenfalls durch ein landwirtschaftliches Anbaugerät, insbesondere eine Legemaschine, gelöst, welches als weiteres Anbaugerät wie vorbeschrieben demontagesicher, d.h. werkzeuglos nicht lösbar, mit einem vor- oder nachbeschriebenen erfindungsgemäßen Tragwerk verbunden ist. Insbesondere ist das landwirtschaftliche Anbaugerät über das Tragwerk mit dem Dreipunkt-Kraftheber eines Schleppers verbindbar. Dem erfindungsgemäßen Anbaugerät kommen somit ebenfalls die vor- und nachbeschriebenen Vorteile des Tragwerks zu.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer perspektivischen Darstellung von schräg hinten,
- Fig. 2: den Gegenstand nach Fig. 1 in einer Frontansicht,
- Fig. 3: den Gegenstand nach Fig. 1 in einer Seitenansicht,
- Fig. 4: einen weiteren erfindungsgemäßen Gegenstand in einer Betriebsstellung an einem Schlepper und mit erstem Anbaugerät.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

Sofern sinnvoll werden funktional gleichwirkende Elemente mit identischen Bezugsziffern versehen.

Ein erfindungsgemäßes Tragwerk 1 weist einen Rahmen mit zumindest einem unteren Querträger 2 und einem oberen Querträger 3 auf, die über Seitenträger 4 miteinander verbunden sind. Vorliegend sind die Seitenträger 4 durch zwei parallel verlaufende Stahlbleche ausgebildet. Am unteren Ende der Seitenträger 4 sind Unterlenker 6 gelenkig angeordnet, die über den unteren Querträger 2 miteinander verbunden sind. Zwischen den die Seitenträger 4 ausbildenden Stahlblechen 32 sind am unteren Ende jeweils Bolzen 8 als Unterlenkerkopplungsmittel angeordnet, die zur Kopplung mit einem Fanghaken eines in der Figur nicht dargestellten Unterlenkern 21 eines Schlepper-Dreipunkt-Krafthebers vorgesehen ist. Am Ende der Unterlenker 6 sind untere Kopplungseinheiten 9 in Form von Fanghaken ausgebildet, welche einstückig mit dem jeweiligen Unterlenker 6 ausgebildet sein können. Die Kopplungseinheiten 9 weisen im Fanghaken angeordnete Reduzierkugeln 11 auf.

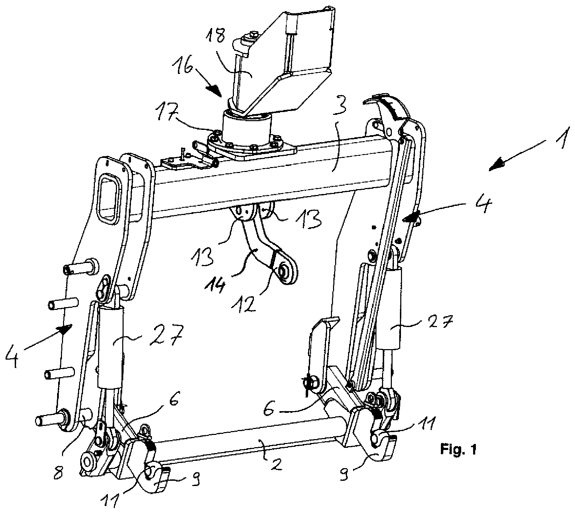

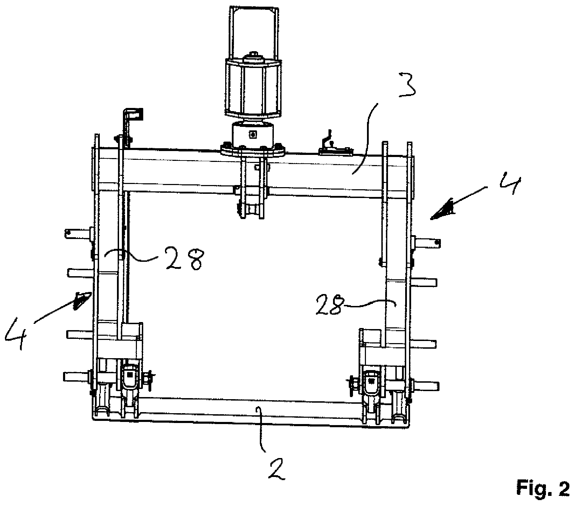

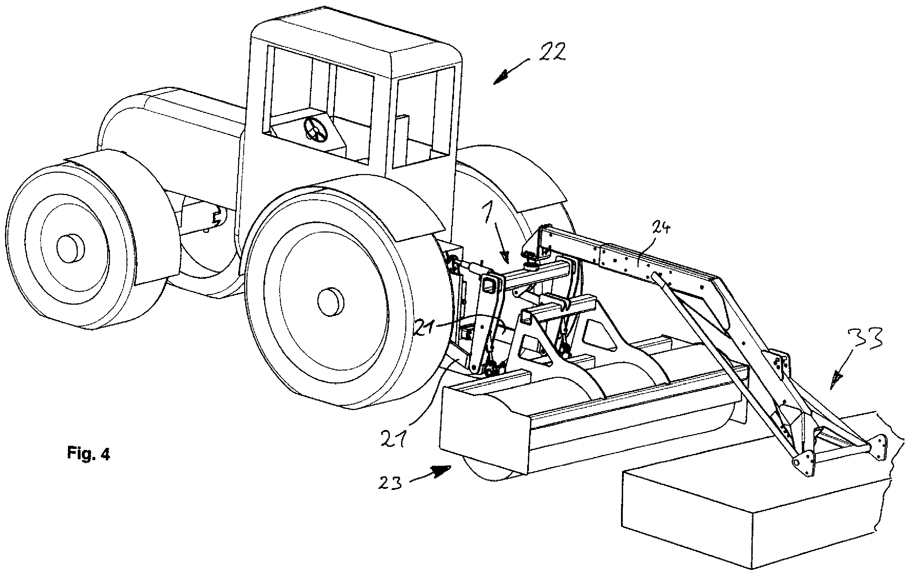

Eine obere Kopplungseinheit 12 ist am oberen Querträger mittels zweier an diesem angeordneten Verbindungselementen 13, die mit einem Bolzen ein Gelenk für den Oberlenker 14 der oberen Kopplungseinheit 12 ausbilden, am Querträger 3 angebunden. Die beiden unteren Kopplungseinheiten 9 bilden mit der Kopplungseinheit 12 eine Dreipunkt-Aufnahme des Tragwerks 1 aus, so dass in üblicher Weise Anbaugeräte angeordnet werden können. Der dargestellte Rahmen kann somit als Zwischenrahmen auf der einen Seite mit einem Anbaugerät 23 (Fig. 4) versehen werden und auf der anderen Seite an einem Schlepper-Dreipunkt-Kraftheber befestigt werden. Entsprechend sind die Bolzen 8 als Unterlenkerkopplungsmittel hin zum Schlepper-Dreipunkt-Kraftheber ausgebildet, wie auch die in der Fig. 1 und 2 an dem oberen Querträger 3 vorhandene Verbindungselemente 13 Teil des Oberlenkerkopplungsmittels sind. Ein zugehöriger Bolzen ist nicht dargestellt.

Am oberen Querträger 3 ist erfindungsgemäß eine Koppelvorrichtung 16 zur Befestigung eines weiteren Anbaugeräts 33 vorgesehen. Die Koppelvorrichtung 16 umfasst eine Gelenkverbindung in Form eines Kugelkopfgelenks, dessen in der Fig. 1 unterer Teil 17 fest mit dem Querträger 3 verbunden ist und dessen eine nicht näher dargestellte Kugel aufweisender oberer Teil 18 mittels der in der Figur ersichtlichen, mit Ausnehmungen versehenen Adaptervorrichtung 18 mit einer beispielsweise als Schwanenhals ausgebildeten Deichsel eines weiteren Anbaugeräts 33 zu verbinden ist. Die Verbindung erfolgt vorliegend über nicht dargestellte Schraubmittel, die mit einem Drehmoment von mindestens 25 Nm angezogen werden müssen. Insofern ist die Verbindung des weiteren Anbaugeräts 33 mit dem Tragwerk werkzeuglos unlösbar, wobei davon ausgegangen wird, dass es sich bei den Schraubmitteln um normale, flügellose Schrauben und entsprechende Muttern od. dgl. handelt, die z.B. mit üblichen Schraubenschlüsseln zu betätigen sind.

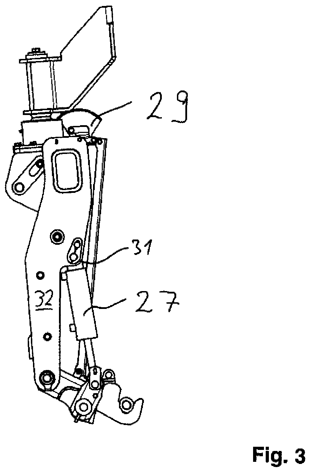

Durch zwischen Unterlenker 6 und Seitenträger 4 befindliche Stellmittel der Stellvorrichtung in Form von Zylindern 27 sind die Unterlenker 6 (Fig. 2) schwenkbar an den Seitenträgern 4 angelenkt. Die Fanghaken 9 können hoch und runter geschwenkt werden. Die Ableitung der Kräfte erfolgt bei dem vorliegenden Ausführungsbeispiel vorteilhaft senkrecht in die Seitenträger 4, da diese mit den Querträgern 2 und 3 ein Rechteck ausbilden (Fig. 2). Abdeckungen 28 dienen dem Schutz der Zylinder 27 vor Verschmutzungen, die insbesondere von Seiten der Schlepperräder zum Tragwerk 1 gelangen können. Ein Winkelmesser 29, der alternativ oder ergänzend auch als Höhenmesser ausgebildet sein kann, zeigt die Verschwenkung der Unterlenker 6 an. Die Zylinder 27 sind unterhalb einer Schulter 31 der Seitenstreben 4 und an dieser gelenkig festgelegt platzsparend neben sich verjüngenden Blechen 32 der Seitenstreben 4 angeordnet (Fig. 3).

Im Betrieb ist das erfindungsgemäße Tragwerk 1 mit seiner Vorderseite an dem Dreipunkt-Kraftheber eines Schleppers 22 befestigt. Hierfür werden die Unterlenkerkopplungsmittel in Form der Bolzen 8 in die Fanghaken der Schlepperunterlenker 21 des Schleppers 22 eingesetzt (Fig. 4). Die vom Tragwerk 1 selbst ausgebildete Dreipunkt-Aufnahme dient der Anbindung des gezeigten, eine Einrichtung zur Einebnung von Bodenunebenheiten, vorzugsweise eine Walze oder mehrere nebeneinander angeordnete Räder, aufweisenden Anbaugeräts 23. Dieses ist genauso rückwärtig angeordnet wie das mittels eines Schwanenhalses 24 angeordnete, erfindungsgemäße, weitere landwirtschaftliche Anbaugerät 33, welches nur schematisch und teilweise gebrochen dargestellt ist. Durch eine Schwimmstellung von Zylindern 27 der Stellvorrichtung des Tragwerks 1 verbleibt das Anbaugerät 23 auch in seiner bodennahen Position, wenn mittels des Schlepper-Dreipunkt-Krafthebers der Schwanenhals 24 nach oben bewegt wird.

Aufgrund der werkzeuglos unlösbaren Verbindung des Schwanenhalses 24 mit dem Tragwerk 1 und der Möglichkeit, mittels der Stellvorrichtung des Tragwerks 1 und/oder des Schlepper-Dreipunkt-Krafthebers kann das Anbaugerät 23 für eine Straßenfahrt, in der das weitere Anbaugerät 33 mit dessen eigenen Fahrwerk gezogen werden kann, angehoben werden

## Patentansprüche

1. Tragwerk (1) für die Verbindung zweier landwirtschaftlicher Anbaugeräte mit einem Schlepper-Dreipunkt-Kraftheber, umfassend einen Rahmen mit zumindest einem unteren Querträger (2), sowie mit zumindest einem Seitenträger (4), wobei das Tragwerk (1) zumindest zwei Kopplungseinheiten (12,9) für eine Dreipunktverbindung mit einem ersten Anbaugerät (23) aufweist, das Tragwerk (1) weiterhin im Betrieb zum Schlepper (22) hin gerichtet mindestens ein Unterlenkerkopplungsmittel zur Verbindung mit dem Schlepper-Dreipunkt-Kraftheber umfasst und eine oben am Rahmen angeordnete Koppelvorrichtung (16) zur Befestigung des mindestens einen weiteren Anbaugerätes (33) aufweist, **dadurch gekennzeichnet, dass** das Tragwerk (1) einen Dreipunkt-Kraftheber ausbildet.

2. Tragwerk nach Anspruch 1, **dadurch gekennzeichnet, dass** der Rahmen zumindest einen oberen Querträger (3) aufweist, wobei die Koppelvorrichtung (16) insbesondere am oberen Querträger (3) angeordnet ist, und/oder wobei der Rahmen zwei Seitenträger (4) aufweist.

3. Tragwerk nach Anspruch 1 oder 2, **gekennzeichnet durch** drei und zwar eine obere und zwei untere Kopplungseinheiten (12,9) für die Dreipunktverbindung und/oder zwei Unterkopplungsmittel und/oder mindestens ein Oberlenkerkopplungsmittel zur Verbindung mit dem Schlepper-Dreipunkt-Kraftheber umfasst.

4. Tragwerk nach einem der vorherigen Ansprüche, **dadurch gekennzeichnet, dass** die Koppelvorrichtung (16) mindestens eine Gelenkverbindung umfasst, durch die das weitere Anbaugerät, insbesondere dessen Deichsel relativ zum Rahmen beweglich ist.

5. Tragwerk nach einem der vorherigen Ansprüche, **dadurch gekennzeichnet, dass** die Koppelvorrichtung (16) vorzugsweise mittels einer ungenormten, maschinenbaulichen Kupplung dergestalt demontagesicher mit dem weiteren Anbaugerät (33) festlegbar und verbindbar ausgebildet ist, dass es zum Lösen des weiteren Anbaugeräts (33) vom Tragwerk (1) eines Werkzeugs bedarf.

6. Tragwerk nach einem der vorherigen Ansprüche, **dadurch gekennzeichnet, dass** zur Verbindung des weiteren Anbaugeräts (33) mit der Koppelvorrichtung (16) eine vorzugsweise mit Ausnehmungen für Schraubmittel versehene Adaptervorrichtung vorgesehen ist.

7. Tragwerk nach einem der vorherigen Ansprüche unter Einschluss von Anspruch 3, **dadurch gekennzeichnet, dass** die unteren Kopplungseinheiten mittels wenigstens einer Stellvorrichtung des Tragwerks (1) relativ zu der oberen Kopplungseinheit (12) höhenverstellbar sind.

8. Tragwerk nach Anspruch 7, **dadurch gekennzeichnet, dass** die beiden unteren Kopplungseinheiten (9) jeweils an einem Unterlenker (6) angeordnet sind.

9. Tragwerk nach Anspruch 8, **dadurch gekennzeichnet, dass** die Unterlenker (6) jeweils an einem Seitenträger (4) gelenkig angeordnet sind, insbesondere wobei die Stellvorrichtung einen zwischen einerseits der unteren Kopplungseinheit (9) oder dem Unterlenker (6) und andererseits einem der Seitenträger (4) angeordneten Zylinder (27) umfasst.

10. Tragwerk nach einem der Ansprüche 7 bis 9, **dadurch gekennzeichnet, dass** die unteren Kopplungseinheiten (9) und/oder die Unterlenker (6) und/oder die unteren Enden der Seitenträger (4) über den unteren Querträger (2) miteinander verbunden sind.

11. Tragwerk nach einem der vorherigen Ansprüche, **dadurch gekennzeichnet, dass** die obere Kopplungseinheit (12) einen an dem oberen Querträger (3) gelenkig festgelegten Oberlenker (14) aufweist.

12. Tragwerk nach einem der vorherigen Ansprüche, **dadurch gekennzeichnet, dass** die Koppelvorrichtung (16) mittig am oberen Querträger (3) angeordnet ist.

13. Tragwerk nach einem der vorherigen Ansprüche, **dadurch gekennzeichnet, dass** die Koppelvorrichtung (16) eine Bolzen-, Maul-, Sattel-, Haken- oder Kugelkopfkopplung umfasst.

14. Tragwerk nach einem der vorherigen Ansprüche, **dadurch gekennzeichnet, dass** die Unterlenkerkopplungsmittel in die Seitenträger (4) integriert oder an diesen festgelegt sind.

15. Tragwerk nach einem der vorherigen Ansprüche, **dadurch gekennzeichnet, dass** das Oberlenkerkopplungsmittel am oberen Querträger (3) angeordnet ist.

16. Landwirtschaftliches Anbaugerät, **dadurch gekennzeichnet, dass** es demontagesicher mit einem Tragwerk (1) nach einem der vorherigen Ansprüche unter Einschluss von Anspruch 5 verbunden ist.

## Claims

1. Supporting structure (1) for connecting two agricultural implements to a tractor three-point power lift, comprising a frame having at least one lower crossmember (2), and having at least one lateral member (4), wherein the supporting structure (1) has at least two coupling units (12, 9) for a three-point connection to a first implement (23), the supporting structure (1) further comprises, directed during operation towards the tractor (22), at least one lower link coupling means for connecting to the tractor three-point power lift, and has a coupling device (16), which is arranged on the top of the frame, for fastening the at least one further implement (33), **characterized in that** the supporting structure (1) forms a three-point power lift.

2. Supporting structure according to Claim 1, **characterized in that** the frame has at least one upper crossmember (3), wherein the coupling device (16) is arranged in particular on the upper crossmember (3), and/or wherein the frame has two lateral members (4).

3. Supporting structure according to Claim 1 or 2, **characterized by** three, to be precise one upper and two lower, coupling units (12, 9) for the three-point connection and/or in that it comprises two lower coupling means and/or at least one upper link coupling means for connecting to the tractor three-point power lift.

4. Supporting structure according to one of the preceding claims, **characterized in that** the coupling device (16) comprises at least one articulated connection by means of which the further implement, in particular its drawbar, is movable relative to the frame.

5. Supporting structure according to one of the preceding claims, **characterized in that** the coupling device (16) is preferably designed, by means of a non-standardized, mechanical engineering coupling, to be able to be fixed and connected to the further implement (33) securely against demounting in such a way that a tool is required to release the further implement (33) from the supporting structure (1).

6. Supporting structure according to one of the preceding claims, **characterized in that**, to connect the further implement (33) to the coupling device (16), there is preferably provided an adapter device which is provided with cutouts for screwing means.

7. Supporting structure according to one of the preceding claims including Claim 3, **characterized in that** the lower coupling units are height-adjustable relative to the upper coupling unit (12) by means of at least one actuating device of the supporting structure (1).

8. Supporting structure according to Claim 7, **characterized in that** the two lower coupling units (9) are each arranged on a lower link (6).

9. Supporting structure according to Claim 7, **characterized in that** the lower links (6) are each arranged on a lateral member (4) in an articulated manner, in particular wherein the actuating device comprises a cylinder (27) which is arranged between, on the one hand, the lower coupling unit (9) or the lower link (6) and, on the other hand, one of the lateral members (4).

10. Supporting structure according to one of Claims 7 to 9, **characterized in that** the lower coupling units (9) and/or the lower links (6) and/or the lower ends of the lateral members (4) are connected to one another via the lower crossmember (2).

11. Supporting structure according to one of the preceding claims, **characterized in that** the upper coupling unit (12) has an upper link (14) which is fixed to the upper crossmember (3) in an articulated manner.

12. Supporting structure according to one of the preceding claims, **characterized in that** the coupling device (16) is arranged centrally on the upper crossmember (3).

13. Supporting structure according to one of the preceding claims, **characterized in that** the coupling device (16) comprises a pin coupling, jaw coupling, saddle coupling, hook coupling or ball head coupling.

14. Supporting structure according to one of the preceding claims, **characterized in that** the lower link coupling means are integrated into or fixed to the lateral members (4).

15. Supporting structure according to one of the preceding claims, **characterized in that** the upper link coupling means is arranged on the upper crossmember (3).

16. Agricultural implement, **characterized in that** it is connected securely against demounting to a supporting structure (1) according to one of the preceding claims including Claim 5.

## Revendications

1. Structure porteuse (1) pour le raccordement de deux accessoires agricoles à un attelage à trois points de tracteur, comprenant un châssis avec au moins une traverse inférieure (2), ainsi qu'au moins un support latéral (4), la structure porteuse (1) présentant au moins deux unités d'accouplement (12, 9) pour un raccordement à trois points à un premier accessoire (23), la structure porteuse (1) comprenant en outre, en fonctionnement, au moins un moyen d'accouplement de bras inférieur dirigé vers le tracteur (22) pour le raccordement au dispositif d'attelage à trois points de tracteur et présentant un dispositif d'accouplement (16) agencé en haut sur le châssis pour la fixation de l'au moins un autre accessoire (33), **caractérisée en ce que** la structure porteuse (1) forme un attelage à trois points.

2. Structure porteuse selon la revendication 1, **caractérisée en ce que** le châssis présente au moins une traverse supérieure (3), le dispositif d'accouplement (16) étant notamment agencé sur la traverse supérieure (3), et/ou le châssis présentant deux supports latéraux (4) .

3. Structure porteuse selon la revendication 1 ou 2, **caractérisée par** trois unités d'accouplement, à savoir une supérieure et deux inférieures (12, 9), pour le raccordement à trois points et/ou deux moyens d'accouplement inférieurs et/ou au moins un moyen d'accouplement de bras supérieur pour le raccordement à l'attelage à trois points de tracteur.

4. Structure porteuse selon l'une quelconque des revendications précédentes, **caractérisée en ce que** le dispositif d'accouplement (16) comprend au moins une liaison articulée par laquelle l'autre accessoire, notamment son timon, est mobile par rapport au châssis.

5. Structure porteuse selon l'une quelconque des revendications précédentes, **caractérisée en ce que** le dispositif d'accouplement (16) est configuré pour pouvoir être fixé et raccordé de manière résistante au démontage à l'autre accessoire (33), de préférence au moyen d'un accouplement non standard de construction mécanique, de telle sorte qu'un outil est nécessaire pour détacher l'autre accessoire (33) de la structure porteuse (1).

6. Structure porteuse selon l'une quelconque des revendications précédentes, **caractérisée en ce que**, pour raccorder l'autre accessoire (33) au dispositif d'accouplement (16), un dispositif adaptateur, de préférence pourvu d'évidements pour des moyens de vissage, est prévu.

7. Structure porteuse selon l'une quelconque des revendications précédentes, y compris la revendication 3, **caractérisée en ce que** les unités d'accouplement inférieures sont réglables en hauteur par rapport à l'unité d'accouplement supérieure (12) au moyen d'au moins un dispositif de réglage de la structure porteuse (1) .

8. Structure porteuse selon la revendication 7, **caractérisée en ce que** les deux unités d'accouplement inférieures (9) sont agencées chacune sur un bras inférieur (6).

9. Structure porteuse selon la revendication 8, **caractérisée en ce que** les bras inférieurs (6) sont chacun agencés de manière articulée sur un support latéral (4), le dispositif de réglage comprenant notamment un vérin (27) agencé entre d'une part l'unité d'accouplement inférieure (9) ou le bras inférieur (6) et d'autre part l'un des supports latéraux (4).

10. Structure porteuse selon l'une quelconque des revendications 7 à 9, **caractérisée en ce que** les unités d'accouplement inférieures (9) et/ou les bras inférieurs (6) et/ou les extrémités inférieures des supports latéraux (4) sont reliés entre eux par la traverse inférieure (2).

11. Structure porteuse selon l'une quelconque des revendications précédentes, **caractérisée en ce que** l'unité d'accouplement supérieure (12) présente un bras supérieur (14) fixé de manière articulée à la traverse supérieure (3).

12. Structure porteuse selon l'une quelconque des revendications précédentes, **caractérisée en ce que** le dispositif d'accouplement (16) est agencé au centre de la traverse supérieure (3).

13. Structure porteuse selon l'une quelconque des revendications précédentes, **caractérisée en ce que** le dispositif d'accouplement (16) comprend un accouplement à boulon, à mâchoire, à sellette, à crochet ou à tête sphérique.

14. Structure porteuse selon l'une quelconque des revendications précédentes, **caractérisée en ce que** les moyens d'accouplement de bras inférieur sont intégrés dans les supports latéraux (4) ou fixés à ceux-ci.

15. Structure porteuse selon l'une quelconque des revendications précédentes, **caractérisée en ce que** le moyen d'accouplement de bras supérieur est agencé sur la traverse supérieure (3).

16. Accessoire agricole, **caractérisé en ce qu'**il est raccordé de manière résistante au démontage à une structure porteuse (1) selon l'une quelconque des revendications précédentes, y compris la revendication 5.
